# EUROPÄISCHE PATENTSCHRIFT

(11) **EP 1 132 258 B1**
(45) Veröffentlichungstag und Bekanntmachung des Hinweises auf die Patenterteilung: **03.12.2003**
(21) Anmeldenummer: 01104974.9
(22) Anmeldetag: 01.03.2001
(51) Int. Cl.: B60R 11/02

(54) **Gehäuse mit einem daran durch eine Rastverbindung befestigten Bauteil**
Housing and component inserted with snap lock connection
Boitier et composant inséré par encliquetage

(30) Priorität: 10.03.2000 DE 10011098
(43) Veröffentlichungstag der Anmeldung: 12.09.2001
(73) Patentinhaber: Siemens Aktiengesellschaft, 80333 München (DE)
(72) Erfinder: Krohn, Martin, 35633 Lahnau (DE); Häuser-Bausch, Dagmar, 35440 Linden (DE)

(56) Entgegenhaltungen:
- EP-A- 0 513 455
- EP-A- 0 588 119
- EP-A- 0 658 011
- DE-U- 9 413 800
- US-A- 4 940 414

## Beschreibung

Die Erfindung betrifft ein Gehäuse mit einem daran durch eine manuell entriegelbare Rastverbindung befestigten Bauteil, wobei die Rastverbindung einen im verrasteten Zustand über eine Rastfläche des Bauteils greifenden Rasthaken und ein an dem Bauteil angeordnetes Entriegelungsteil zum Bewegen des Rasthakens in eine die Rastfläche freigebende Entriegelungsstellung hat. Eine Einrichtung nach dem Oberbegriff des Anspruchs 1 ist aus der US 4 940 414 bekannt.

Gehäuse der vorstehenden Art werden derzeit beispielsweise für Autoradios oder Fahrzeugnavigationsgeräte vorgesehen. Bei dem daran durch die manuell entriegelbare Rastverbindung befestigten Bauteil kann es sich dabei um ein Bedienteil oder auch nur um einen Schlüssel handeln, mit dem die Funktion des Autoradios oder des Fahrzeugnavigationsgerätes freigegeben wird. Das ein Bedienteil oder einen Schlüssel bildende Bauteil ist entnehmbar, damit man es beim Verlassen des Kraftfahrzeugs mitnehmen kann und dadurch das verbliebene Gerät für Diebe uninteressant wird, weil es nicht funktionsfähig ist. Da das entriegelbare Bauteil bei jedem Verlassen des Fahrzeugs mitgenommen werden soll und deshalb sehr oft entriegelt und wieder verriegelt werden muss, sollte dieses Entriegeln und Verriegeln möglichst bequem möglich sein.

Bei dem bekannten Gehäuse der vorstehenden Art ist das Bedienteil mit zwei manuell betätigbaren Schiebern ausgestattet, mit denen jeweils ein Rasthaken des Bedienteils in eine Entriegelungsstellung bewegbar ist. Das Verschieben eines Schiebers ist in der Praxis lästig und erfordert Aufmerksamkeit, weil mit dem Entriegeln das Bedienteil vom Gehäuse gelöst wird und deshalb herunterfallen kann, wenn man es nicht gleichzeitig festhält.

Zur Vereinfachung des Entriegelns sieht man oftmals am Gehäuse eine Drucktaste vor, die man zum Entriegeln lediglich in das Gehäuse hineinbewegen muss. Solche Entriegelungsmechanismen sind jedoch relativ aufwendig gestaltet und erfordern in dem Gehäuse relativ viel Platz.

Bekannt geworden sind auch Gehäuse mit einem daran verriegelten Bauteil, bei welchen das Entriegeln mittels eines Schlüssels erfolgt, der in einen Schacht des Gehäuses eingeschoben werden muss, damit Rasthaken das lösbare Bauteil freigeben. Auch solche Gehäuse sind aufwendig gestaltet und bedingen für die Entriegelungsmittel relativ viel Bauraum.

Der Erfindung liegt das Problem zugrunde, ein Gehäuse mit einem daran durch eine manuell entriegelbare Rastverbindung befestigten Bauteil derart zu gestalten, dass das Bauteil möglichst bequem entriegelt werden kann und die hierzu erforderlichen Mittel möglichst einfach und platzsparend gestaltet sind.

Dieses Problem wird erfindungsgemäß dadurch gelöst, dass das Bauteil an dem Gehäuse kippbar gehalten ist und zum Bewegen des Entriegelungsteils an dem Gehäuse ein beim Kippen des Bauteils gegen das Entriegelungsteil gelangendes Abweisteil vorgesehen ist und dass der Rasthaken an der Seite des Bauteils vorgesehen ist, welche sich beim Kippen des Bauteils aus dem Gehäuse herausbewegt.

Durch diese Gestaltung kann auf eine separate Drucktaste am Gehäuse zum Entriegeln der Rasthaken verzichtet werden. Das zu entriegelnde Bauteil bildet zugleich die Drucktaste für die Entriegelung. Da das Entriegeln durch Kippen des Bauteils erfolgt, bewegt sich das Bauteil an der der Betätigungsseite gegenüberliegenden Seite durch die Betätigung aus dem Gehäuse heraus, so dass das Bauteil beim Entriegeln dort leicht gegriffen werden kann. Trotz dieser funktionellen Vorteile gegenüber den bekannten Gehäusen kann das erfindungsgemäße Gehäuse sehr einfach gestaltet sein und seine Mittel zum Entriegeln benötigen relativ wenig Platz in dem Gehäuse oder dem zu entriegelnden Bauteil.

Das Entriegelungsteil muss zum Entriegeln den Rasthaken aus der Verriegelungsstellung herausschwenken. Hierzu könnte das Entriegelungsteil beispielsweise als Winkelhebel ausgebildet sein, der beim Kippen des Bauteils mit einem Schenkel gegen das Abweisteil des Gehäuses gelangt, sich dadurch verschwenkt und sich dabei mit seinem anderen Schenkel gegen den Rasthaken bewegt. Besonders einfach sind die Mittel zum Entriegeln des Rasthakens gestaltet, wenn gemäß einer Weiterbildung der Erfindung das Entriegelungsteil als ein geradlinig in dem Bauteil verschieblich gehaltener Schieber ausgebildet ist, welcher eine zu dem Abweisteil hin gerichtete Abweisrampe hat. Ein solches als Schieber ausgebildetes Entriegelungsteil beansprucht innerhalb des zu entriegelnden Bauteils relativ wenig Platz; so dass sich insgesamt ein geringer Bauraum ergibt.

Das Bauteil kann durch Drücken an einer beliebigen Seite seiner beiden Enden entrastet werden, so dass sich ein besonders hoher Bedienungskomfort ergibt, wenn das Bauteil an zwei gegenüberliegenden Seiten durch jeweils einen Rasthaken verrastet ist, wenn das als Schieber ausgebildete Entriegelungsteil an den beiden gegenüberliegenden Seiten eine Abweisrampe hat, die jeweils einem Abweisteil des Gehäuses zugewandt ist.

Das Entriegelungsteil braucht nur zum Zwecke des Entriegelns aus dem entriegelbaren Bauteil herauszuragen, so dass es bei Mitnahme des Bauteils nicht beschädigt werden kann oder bei der Mitnahme des Bauteils als scharfkantiger Vorsprung stört, wenn das als Schieber ausgebildete Entriegelungsteil innerhalb des Bauteils angeordnet ist und das Bauteil in einer rückseitigen Wand zumindest eine Durchbrechung zum Eingreifen,des an dem Gehäuse vorgesehenen Abweisteils hat.

Das Bauteil ist gegen ein Verkippen um seine quer zu seiner Längsachse gesichert; wenn gemäß einer anderen Weiterbildung der Erfindung das Gehäuse auf-jeder Seite paarweise jeweils zwei nebeneinander angeordnete Abweisteile und das Bauteil entsprechend auf jeder Seite zwei Abweisrampen hat.

Das Bauteil ragt nach dem Entriegeln mit einem Ende besonders weit aus dem Gehäuse heraus, so dass es besonders bequem gegriffen werden kann, wenn das Bauteil im mittleren Bereich durch eine Feder von dem Gehäuse weg vorgespannt ist.

Das Bauteil wird unabhängig von der Feder klapperfrei von den beiden Rasthaken gehalten, wenn in dem Bauteil eine Blattfeder angeordnet ist, welche bei in dem Gehäuse eingesetzten Bauteil mit Vorspannung gegen zwei von dem Gehäuse her in das Bauteil eingreifende Kontaktstifte anliegt und diese elektrisch überbrückt. Eine solche Blattfeder hat eine Doppelfunktion. Sie dient einerseits der Kontaktierung der Kontaktstifte, so dass ein auf ihr sitzender elektrischer Widerstand oder ein Chip mit einer elektronischen Schaltung in dem Gehäuse elektrische Verbindung erhält, andererseits spannt die Blattfeder das Bauteil nach außen hin vor, so dass es nicht klappern kann.

Das als Schieber ausgebildete Entriegelungsteil gelangt nach dem Entriegeln des Bauteils und damit bei Mitnahme des Bauteils zwangsläufig in eine Mittelstellung, so dass es nicht aus einem Ende der Bauteils herausragen kann, wenn das als Schieber ausgebildete Entriegelungsteil zwei in Einsetzrichtung des Bauteils divergierende Rampen hat und die Blattfeder mit jeweils einem Zentrierarm gegen jede der Rampen anliegt.

Die Blattfeder ist besonders einfach gestaltet, wenn sie paarweise an jedem Ende zwei gegen jeweils zwei Kontaktstifte anliegende Kontaktierungsarme und zwei gegen das als Schieber ausgebildete Entriegelungsteil anliegende Zentrierarme hat.

Die Erfindung lässt verschiedene Ausführungsformen zu. Zwei davon sind in der Zeichnung dargestellt und werden nachfolgend beschrieben. Diese zeigt in
- Fig.1: eine schematische Schnittdarstellung eines Teilbereiches einer ersten Ausführungsform eines Gehäuses mit einem darin verrasteten Bauteil,
- Fig.2: eine Frontansicht einer zweiten Ausführungsform eines Gehäuses mit einem darin verrasteten Bauteil,
- Fig.3: einen Schnitt durch das Gehäuse entlang der Linie III - III in Figur 2,
- Fig.4: einen Schnitt durch das Gehäuse entlang der Linie IV - IV in Figur 2, wobei sich das Bauteil in Einbauposition befindet,
- Fig.5: einen Schnitt durch das Gehäuse entlang der Linie IV - IV in Figur 2, wobei sich das Bauteil in niedergedrückter Einbauposition befindet, '
- Fig.6: einen Schnitt durch das Gehäuse entlang der Linie IV - IV in Figur 2, wobei sich das Bauteil in Entriegelungsposition befindet,
- Fig.7: einen Schnitt durch das Gehäuse entlang der Linie IV - IV in Figur 2, wobei sich das Bauteil in Entnahmeposition befindet,
- Fig.8: eine Draufsicht auf eine Blattfeder des Bauteils.

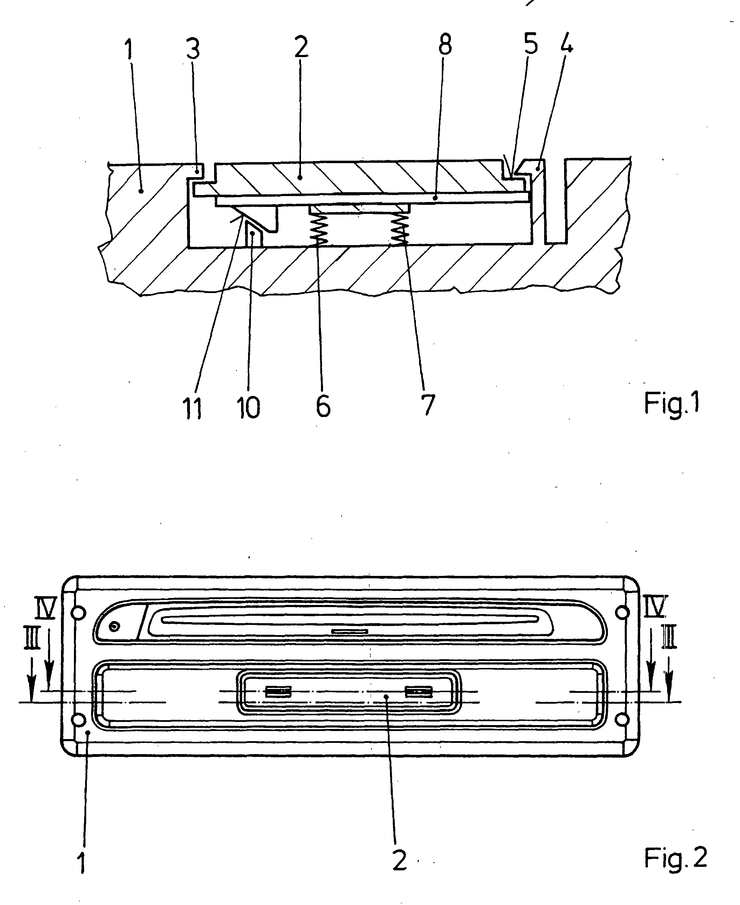

Die Figur 1 zeigt teilweise ein Gehäuse 1, in welches ein Bauteil 2 entriegelbar eingesetzt ist. Hierzu greift das Gehäuse 1 in Figur 1 gesehen an der linken Seite des Bauteils 2 mit einem Überstand 3 geringfügig über ein Ende des Bauteils 2, während am anderen Ende ein elastischer Rasthaken 4 über eine Rastfläche 5 des Bauteils 2 ragt. Zwei Federn 6, 7 spannen das Bauteil 2 nach außen hin vor.

Wichtig für die Erfindung ist ein als Schieber ausgebildetes Entriegelungsteil 8, welches mit seinem rechten Ende gegen den Rasthaken 4 anliegt und von dem Bauteil 2 verschieblich gehalten wird. Das Gehäuse 1 hat unterhalb des Bauteils 2 ein Abweisteil 10, welches eine Abweisrampe 11 des als Schieber ausgebildeten Entriegelungsteils 8 berührt.

Drückt man nahe des linken Endes des Bauteils 2 auf dieses Bauteil 2, dann bewegt es sich mit seinem linken Ende in das Gehäuse 1 hinein. Dabei rutscht die Abweisrampe 11 über das Abweisteil 10, so dass sich das als Schieber ausgebildete Entriegelungsteil 8 in Figur 1 gesehen nach rechts bewegt und dadurch den Rasthaken 4 entsprechend nach rechts drückt. Hierdurch kommt die Rastfläche 5 vom Rasthaken 4 frei. Das hat zu Folge, dass die Federn 6, 7 das Bauteil 2 mit dem rechten Ende aus dem Gehäuse 1 zu drücken vermögen und das Bauteil 2 am rechten Ende bequem gegriffen werden kann, um es dem Gehäuse 1 zu entnehmen.

Die Figur 2 zeigt das Gehäuse 1 eines Fahrzeugnavigationsgerätes von vorn. In dieses Gehäuse 1 ist das Bauteil 2 von vorn her eingesetzt. Will man dieses Bauteil 2 als Diebstahlschutz für das Fahrzeugnavigationsgerät mitnehmen, dann drückt man gegen die rechte oder linke Seite des Bauteils 2. Die jeweils andere Seite springt dann aus dem Gehäuse 1 heraus, so dass man dort das Bauteil 2 greifen und dem Gehäuse 1 bequem entnehmen kann.

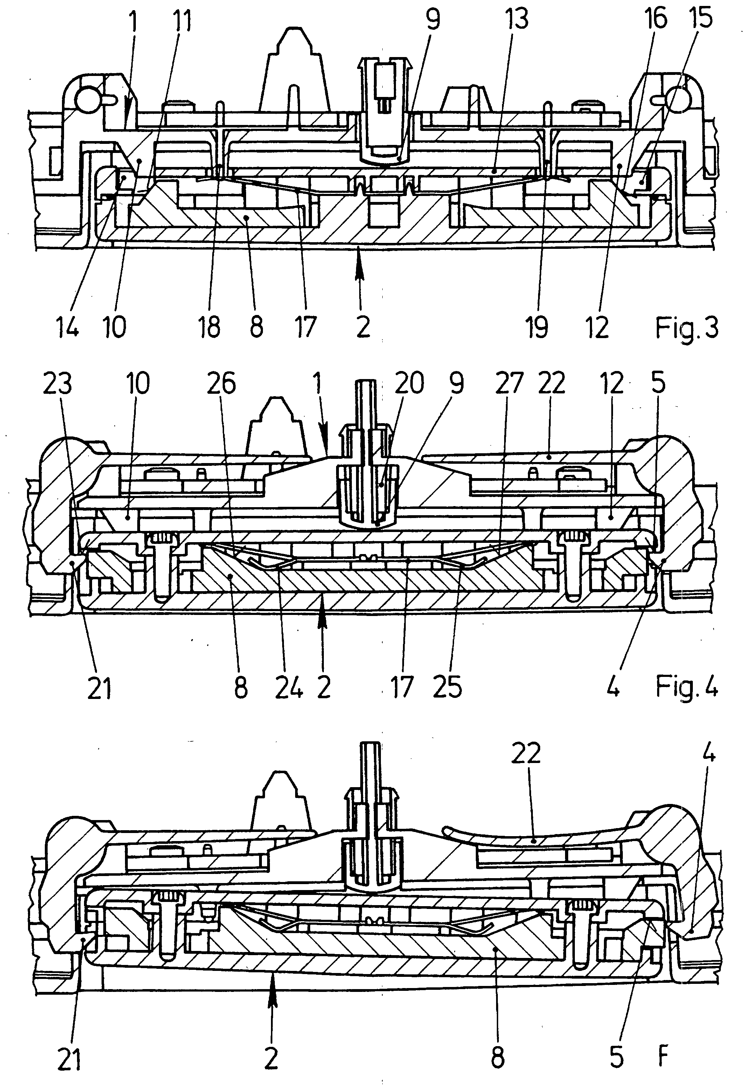

Die Figur 3 lässt erkennen, dass das Gehäuse 1 bei der in den Figuren 2 bis 8 gezeigten Ausführungsform zwei Abweisteile 10, 12 hat. Diese ragen in jeweils eine Durchbrechung 14, 15 einer rückwärtigen Wand 13 des Bauteils 2. Das als Schieber ausgebildete Entriegelungsteil 8 hat zusätzlich zur Abweisrampe 11, welche mit dem Abweisteil 10 zusammenwirkt, eine weitere Abweisrampe 16, welche mit dem Abweisteil 12 zusammenwirkt. Im mittleren Bereich des Bauteils 2 liegt ein Druckstück 9 gegen die Rückseite, also gegen die Wand 13 des Bauteils 2 an. Drückt man gegen die linke Seite des Bauteils 2, dann verschiebt sich das Entriegelungsteil 8,aufgrund des Zusammenwirkens des Abweisteils 10 mit der Abweisrampe 11 nach rechts. Drückt man gegen die rechte Seite des Bauteils 2, dann verschiebt sich das Entriegelungsteil 8 aufgrund des Zusammenwirkens des Abweisteils 12 mit der Abweisrampe 16 nach links.

Das Bauteil 2 enthält desweiteren eine Blattfeder 17, welche an dem Bauteil 2 befestigt ist und sich mit ihren Enden auf Kontaktstiften 18, 19 abstützt. Nicht dargestellt ist, dass die Blattfeder 17 ein Chip trägt, welches die Daten für die Freigabe des Fahrzeugnavigationsgerätes bei eingesetztem Bauteil 2 enthält.

Die Schnittdarstellung gemäß Figur 4 zeigt, dass das Druckstück 9 eine Feder 20 enthält, welche das Druckstück 9 teleskopisch zum Bauteil 2 hin vorspannt. Weiterhin erkennt man in Figur 4, dass zusätzlich zu dem Rasthaken 4 an der gegenüberliegenden Seite des Bauteils 2 ein weiterer Rasthaken 21 vorgesehen ist. Beide Rasthaken 4, 21 sind jeweils mittels eines Federarmes 22 mit dem Gehäuse 1 verbunden und in der in Figur 4 gezeigten Raststellung vorgespannt. Genau wie gemäß Figur 1 greift der Rasthaken 4 über eine Rastfläche 5. Entsprechend greift der Rasthaken 21 über eine Rastfläche 23, so dass das Bauteil 2 formschlüssig in dem Gehäuse 1 gehalten ist.

Die Figur 4 zeigt zusätzlich, dass die Blattfeder 17 Zentrierarme 24, 25 hat, die jeweils gegen eine Rampe 26, 27 des als Schieber ausgebildeten Entriegelungsteils 8 anliegen. Die Neigung der Rampen 26, 27 ist derart, dass sie zur Seite der Blattfeder 17 hin divergieren. Dadurch wird das Entriegelungsteil 8 von den Zentrierarmen 24, 25 in eine mittlere Stellung gehalten und kehrt nach einer seitlichen Verschiebung zwangsläufig wieder in die in Figur 4 gezeigte, mittlere Stellung zurück.

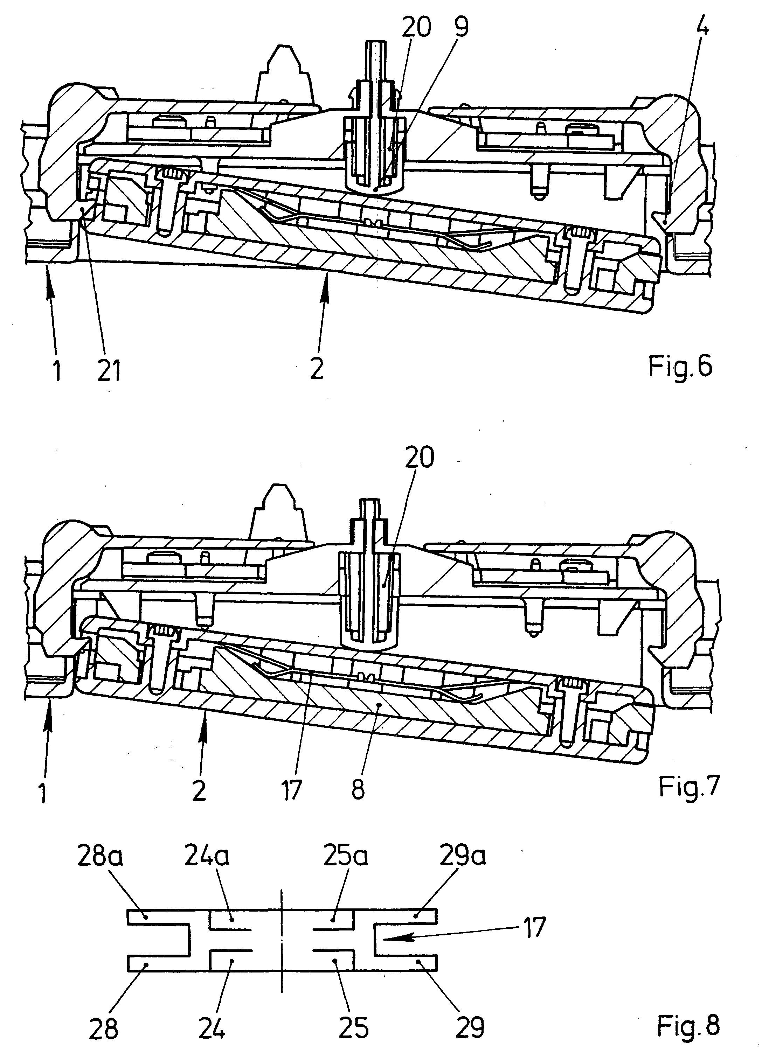

Drückt man gegen die linke Seite des Bauteils 2, dann kippt dieses im Uhrzeigersinn und das Entriegelungsteil 8 verschiebt sich auf die zuvor erläuterte Weise nach rechts. Wie die Figur 5 verdeutlicht, drückt dadurch das als Schieber ausgebildete Entriegelungsteil 8 den Rasthaken 4 nach rechts, wobei sich sein Federarm 22 entsprechend durchbiegt. Die Rastfläche 5 wird dann nicht mehr von dem Rasthaken 4 übergriffen, so dass die Feder 20 des Druckstückes 9 das Bauteil 2 aus dem Gehäuse 1 herausdrücken kann, was Figur 6 verdeutlicht.

Die Figur 7 zeigt das Bauteil 2 in Entnahmestellung. In ihr ist es aufgrund der Wirkung der Feder 20 an der rechten Seite maximal aus dem Gehäuse 1 herausgeschwenkt. Hätte man statt gegen die linke Seite des Bauteils 2 gegen seine rechte Seite gedrückt, würde das Bauteil 2 entsprechend an der linken Seite aus dem Gehäuse 1 herausgeschwenkt.

## Patentansprüche

1. Gehäuse mit einem daran durch eine manuell entriegelbare Rastverbindung befestigten Bauteil, wobei die Rastverbindung einen im verrasteten Zustand über eine Rastfläche des Bauteils greifenden Rasthaken und ein an dem Bauteil angeordnetes Entriegelungsteil zum Bewegen des Rasthakens in eine die Rastfläche freigebende Entriegelungsstellung hat, **dadurch gekennzeichnet, dass** das Bauteil (2) an dem Gehäuse (1) kippbar gehalten ist und zum Bewegen des Entriegelungsteils (8) an dem Gehäuse (1) ein beim Kippen des Bauteils (2) gegen das Entriegelungsteil (8) gelangendes Abweisteil (10) vorgesehen ist und dass der Rasthaken (4) an der Seite des Bauteils (2) vorgesehen ist, welche sich beim Kippen des-Bauteils (2) aus dem Gehäuse (1) herausbewegt.

2. Gehäuse nach Anspruch 1, **;dadurch gekennzeichnet, dass** das Entriegelungsteil (8) als ein geradlinig in dem Bauteil (2) verschieblich gehaltener Schieber ausgebildet ist, welcher eine zu dem Abweisteil (10) hin gerichtete Abweisrampe (11) hat.

3. Gehäuse nach den Ansprüchen 1 oder 2, **dadurch gekennzeichnet, dass** das Bauteil (2) an zwei gegenüberliegenden Seiten durch jeweils einen Rasthaken verrastet ist und das als Schieber ausgebildete Entriegelungsteil (8) an den beiden gegenüberliegenden Seiten eine Abweisrampe (11, 16) hat, die jeweils einem Abweisteil (10, 12) des Gehäuses (1) zugewandt ist.

4. Gehäuse nach zumindest einem der vorangehenden Ansprüche, **dadurch gekennzeichnet, dass** das als Schieber ausgebildete Entriegelungsteil (8) innerhalb des Bauteils (2) angeordnet ist und das Bauteil (2) in einer rückseitigen Wand (13) zumindest eine Durchbrechung (14) zum Eingreifen des an dem Gehäuse (1) vorgesehenen Abweisteils (10, 12) hat.

5. Gehäuse nach Anspruch 4, **dadurch gekennzeichnet, dass** das Gehäuse (1) auf jeder Seite paarweise jeweils zwei nebeneinander angeordnete Abweisteile (10, 12) und das Bauteil (2) entsprechend auf jeder Seite zwei Abweisrampen (11, 16) hat.

6. Gehäuse nach zumindest einem der vorangehenden Ansprüche, **dadurch gekennzeichnet, dass** das Bauteil (2) im mittleren Bereich durch eine Feder (6, 7; 20) von dem Gehäuse (1) weg vorgespannt ist.

7. Gehäuse nach zumindest einem der vorangehenden Ansprüche, **dadurch gekennzeichnet, dass** in dem Bauteil (2) eine Blattfeder (17) angeordnet ist, welche bei in dem Gehäuse (1) eingesetzten Bauteil (2) mit Vorspannung gegen zwei von dem Gehäuse (1) her in das Bauteil (2) eingreifende Kontaktstifte (18, 19) anliegt und diese elektrisch überbrückt.

8. Gehäuse nach Anspruch 7, **dadurch gekennzeichnet, dass** das als Schieber ausgebildete Entriegelungsteil (8) zwei in Einsetzrichtung des Bauteils divergierende Rampen (26, 27) hat und die Blattfeder (17) mit jeweils einem Zentrierarm (24, 25) gegen jede der Rampen (26, 27) anliegt.

9. Gehäuse nach zumindest einem der vorangehenden Ansprüche, **dadurch gekennzeichnet, dass** die Blattfeder (17) paarweise an jedem Ende zwei gegen jeweils zwei Kontaktstifte (18, 19) anliegende Kontaktierungsarme (28, 28a; 29, 29a) und zwei gegen das als Schieber ausgebildete Entriegelungsteil (8) anliegende Zentrierarme (24, 24a; 25, 25a) hat.

## Claims

1. Housing with a component fastened on it by a manually unlockable snap-lock connection, the snap-lock connection having a snap-lock hook, which in the snap-locked state engages over a snap-lock area of the component, and an unlocking part, which is arranged on the component, for moving the snap-lock hook into an unlocking position releasing the snap-lock area, **characterized in that** the component (2) is held in a tiltable manner on the housing (1) and a deflecting part (10) which comes up against the unlocking part (8) when the component (2) is tilted is provided on the housing (1) to move the unlocking part (8), and **in that** the snap-lock hook (4) is provided on the side of the component (2) which moves out of the housing (1) when the component (2) is tilted.

2. Housing according to Claim 1, **characterized in that** the unlocking part (8) is formed as a slide which is held such that it is displaceable in a straight line in the component (2) and has a deflecting ramp (11) directed towards the deflecting part (10).

3. Housing according to Claims 1 or 2 [sic], **characterized in that** the component (2) is snap-locked on two opposite sides by a snap-lock hook in each case and the unlocking part (8) formed as a slide has on the two opposite sides a deflecting ramp (11, 16) which respectively faces a deflecting part (10, 12) of the housing (1).

4. Housing according to at least one of the preceding claims, **characterized in that** the unlocking part (8) formed as a slide is arranged within the component (2) and the component (2) has in a rear wall (13) at least one aperture (14) for the deflecting part (10, 12) provided on the housing (1) to engage in.

5. Housing according to Claim 4, **characterized in that** the housing (1) has on each side, respectively in pairs, two deflecting parts (10, 12) arranged next to each other and the component (2) correspondingly has two deflecting ramps (11, 16) on each side.

6. Housing according to at least one of the preceding claims, **characterized in that** the component (2) is biased away from the housing (1) in the central region by a spring (6, 7; 20).

7. Housing according to at least one of the preceding claims, **characterized in that** arranged in the component (2) is a leaf spring (17) which, with the component (2) inserted in the housing (1), bears with biasing against two contact pins (18, 19) engaging from the housing (1) into the component (2) and electrically bridges the said pins.

8. Housing according to Claim 7, **characterized in that** the unlocking part (8) formed as a slide has two ramps (26, 27) diverging in the direction of insertion of the component and the leaf spring (17) bears against each of the ramps (26, 27) respectively with a centring arm (24, 25).

9. Housing according to at least one of the preceding claims, **characterized in that** the leaf spring (17) has in pairs at each end two contacting arms (28, 28a; 29, 29a) bearing respectively against two contact pins (18, 19), and two centring arms (24, 24a; 25, 25a) bearing against the unlocking part (8) formed as a slide.

## Revendications

1. Boîtier comportant un composant fixé à celui-ci par un encliquetage déverrouillable manuellement, l'encliquetage possédant un crochet d'encliquetage engrenant à l'état encliqueté via une surface d'encliquetage du composant et un élément de déverrouillage disposé sur le composant pour déplacer le crochet d'encliquetage dans une position de déverrouillage libérant la surface d'encliquetage, **caractérisé en ce que** le composant (2) est maintenu sur le boîtier (1) de manière à pouvoir basculer et que pour le déplacement de l'élément de déverrouillage (8) sur le boîtier (1 ) un élément déflecteur (10) accédant contre l'élément de déverrouillage (8) lors du basculement du composant (2), est prévu, et **en ce que** le crochet d'encliquetage (4) est prévu au côté du composant (2), qui se déplace hors du boîtier (1) lors du basculement du composant (2).

2. Boîtier selon la revendication 1, **caractérisé en ce que** l'élément de déverrouillage (8) est conçu comme un curseur maintenu de manière rectiligne de façon à pouvoir coulisser dans le composant (2), lequel curseur possède une rampe déflectrice (11) dirigée vers l'élément déflecteur (10).

3. Boîtier selon la revendication 1 ou 2, **caractérisé en ce que** le composant (2) est encliqueté sur deux côtés opposés par un crochet d'encliquetage respectivement et **en ce que** l'élément de déverrouillage (8) conçu comme curseur possède sur ses deux côtés opposés une rampe déflectrice (11, 16), tournée chacune vers un élément déflecteur (10, 12) du boîtier (1).

4. Boîtier selon au moins l'une des revendications précédentes, **caractérisé en ce que** l'élément de déverrouillage (8) conçu comme curseur est disposé à l'intérieur du composant (2) et **en ce que** le composant (2) possède sur une paroi arrière (13) au moins une percée (14) pour l'engrènement de l'élément déflecteur (10, 12) prévu sur le boîtier (1).

5. Boîtier selon la revendication 4, **caractérisé en ce que** le boîtier (1) possède de chaque côté deux éléments déflecteurs (10, 12) respectivement disposés par paires cote à cote et **en ce que** le composant (2) possède de manière correspondante deux rampes déflectrices (11, 16) de chaque côté.

6. Boîtier selon au moins une des revendications précédentes, **caractérisé en ce que** le composant (2) est précontraint dans sa zone médiane par un ressort (6, 7 ; 20) qui l'éloigne du boîtier (1).

7. Boîtier selon au moins l'une des revendications précédentes, **caractérisé en ce que** un ressort lames (17) est disposé dans le composant (2), lequel ressort à lames avec le composant (2) monté dans le boîtier (1) est en appui avec précontrainte contre deux fiches de contact (18, 19) engrenant dans le composant (2) depuis le boîtier (1) et les court-circuite électriquement.

8. Boîtier selon la revendication 7, **caractérisé en ce que** l'élément de déverrouillage (8) conçu comme curseur possède deux rampes divergentes (26, 27) dans le sens du montage du composant et **en ce que** le ressort à lames (17) est en appui avec un bras de centrage (24, 25) respectivement contre chacune des deux rampes (26, 27).

9. Boîtier selon au moins l'une des revendications précédentes **caractérisé en ce que** le ressort à lames (17) possède deux bras de contact (28, 28a ; 29, 29a) en appui contre deux fiches de contact (18, 19) disposées par paires à chaque extrémité et deux bras de centrage (24, 24a ; 25, 25a) en appui contre l'élément de déverrouillage (8) conçu comme curseur.
